# FASCICULE DE BREVET EUROPEEN

(11) **EP 4 355 182 B1**
(45) Date de publication et mention de la délivrance du brevet: **02.07.2025**
(21) Numéro de dépôt: 22733466.1
(22) Date de dépôt: 17.06.2022
(51) Int. Cl.: A47J 43/044

(54) **APPAREIL DE PRÉPARATION CULINAIRE COMPRENANT UNE CUVE DE TRAVAIL MOBILE**
LEBENSMITTELZUBEREITUNGSVORRICHTUNG MIT EINEM BEWEGLICHEN ARBEITSBEHÄLTER
FOOD PREPARATION APPLIANCE COMPRISING A MOVABLE WORKING BOWL

(30) Priorité: 18.06.2021 FR 2106529
(43) Date de publication de la demande: 24.04.2024
(73) Titulaire: SEB S.A., 69130 Ecully (FR)
(72) Inventeur: MORICE, Katell, 69134 ECULLY CEDEX (FR); BOUFFAY, Alain, 69134 ECULLY CEDEX (FR)
(74) Mandataire: SEB Développement
(86) Numéro de dépôt international: PCT/EP2022/066624
(87) Numéro de publication internationale: WO 2022/263667

(56) Documents cités:
- CN-U- 205 041 272
- FR-A- 1 180 297

## Description

### Domaine technique de l'invention

La présente invention concerne de manière générale un appareil de préparation culinaire, et en particulier un tel appareil équipé d'une cuve de travail et d'une tête d'entraînement portant un outil de travail qui peut travailler des aliments dans la cuve de travail.

### État de la technique

Il est connu dans l'art antérieur des appareils de préparation culinaire équipés d'une cuve de travail et d'une tête d'entraînement portant un outil de travail qui peut travailler des aliments dans la cuve de travail, comme ceux décrits dans les documents FR1180297A, GB831156, CN203353528 ou encore CN205041272. En contrepartie, ces appareils présentent les inconvénients d'être volumineux et/ou peu pratiques à utiliser en raison des nombreuses opérations à effectuer avant et après travail des aliments, pour installer ou pour retirer les accessoires tels qu'une cuve de travail et/ou un outil de travail.

### Exposé de l'invention

Un but de la présente invention est de répondre aux inconvénients des documents de l'art antérieur mentionnés ci-dessus et en particulier, tout d'abord, de proposer un appareil de préparation culinaire dont l'encombrement est réduit, et/ou dont l'ergonomie d'utilisation est améliorée, notamment avant et/ou après la phase de travail des aliments, pour installer ou retirer les accessoires tels qu'une cuve de travail et/ou un outil de travail.

Pour cela un premier aspect de l'invention concerne un appareil de préparation culinaire, comprenant :
- un boîtier,
- une cuve de travail agencée pour recevoir des aliments à préparer,
- au moins un outil de travail agencé pour travailler les aliments reçus dans la cuve de travail,
- une tête d'entraînement agencée pour porter l'outil de travail,
dans lequel :
- la cuve de travail est mobile par rapport au boîtier entre une position de travail et une position d'accès,
- la tête d'entraînement est mobile par rapport au boîtier entre une position engagée dans laquelle l'outil de travail est engagé dans la cuve de travail en position de travail, et une position dégagée dans laquelle l'outil de travail est au moins partiellement

dégagé de la cuve de travail,
du fait que l'appareil de préparation culinaire comprend un dispositif d'asservissement du mouvement de la tête d'entraînement au mouvement de la cuve de travail pour imposer un mouvement de rotation à la tête d'entraînement lors du mouvement de la cuve de travail.

Selon la présente mise en œuvre, le dispositif d'asservissement provoque le mouvement de la tête d'entraînement en fonction du mouvement de la cuve de travail. Ainsi, l'utilisateur peut facilement manipuler uniquement la cuve de travail, ce qui améliore l'ergonomie. De plus, le pivotement de la tête d'entraînement provoque le relevage de l'outil de travail, ce qui met l'outil de travail dans une position dans laquelle il est facile à manipuler par l'utilisateur.

Selon une mise en œuvre, le dispositif d'asservissement est agencé pour imposer en outre un mouvement de translation à la tête d'entraînement lors du mouvement de la cuve de travail. Un tel mouvement supplémentaire de translation permet de gérer au mieux la cinématique pour éviter toute interférence.

Selon une mise en œuvre, le dispositif d'asservissement est agencé pour imposer à la tête d'entraînement le mouvement de translation et le mouvement de rotation de manière au moins partiellement séquentielle ou de manière au moins partiellement simultanée. De manière préférée, on peut prévoir, lors du mouvement de retrait de la cuve de travail depuis la position de travail, d'abord un mouvement de translation verticale de l'outil de travail pour l'éloigner du fond de la cuve de travail, et ensuite un mouvement de pivotement pour le dégager de la cuve de travail sans interférence.

Selon une mise en œuvre, le dispositif d'asservissement comprend un bloc débrayable agencé entre le boîtier et la tête d'entraînement, agencé pour accoupler / désaccoupler une première partie de la tête d'entraînement en liaison glissière d'une deuxième partie de la tête d'entraînement en liaison pivot lors du mouvement de la cuve de travail.

Selon une mise en œuvre, le mouvement de la cuve de travail entre la position de travail et la position d'accès comprend au moins une translation. Une telle translation, typiquement horizontale, permet de limiter l'encombrement en hauteur.

Selon une mise en œuvre, le mouvement de la cuve de travail entre la position de travail et la position d'accès comprend au moins une rotation. On peut prévoir une rotation d'axe vertical, pour un déplacement horizontal de la cuve de travail.

Selon une mise en œuvre, le dispositif d'asservissement comprend au moins un actionneur électrique accouplé à la tête d'entraînement pour imposer le mouvement de rotation de la tête d'entraînement,
et l'actionneur électrique est accouplé à la tête d'entraînement en prise directe, ou via un train d'engrenage, ou via un dispositif de transmission de mouvement linéaire et un bras de levier.

Selon une mise en œuvre, le dispositif d'asservissement comprend au moins un capteur de détection de position de la cuve de travail, agencé pour détecter la position de la cuve de travail entre la position de travail et la position d'accès, de sorte à piloter l'actionneur électrique en fonction de la position de la cuve de travail.

Selon une mise en œuvre, le capteur de détection de position de la cuve de travail est un capteur optique, par exemple à faisceau laser, ou un capteur infrarouge, ou un capteur à ultrasons ou un capteur linéaire par exemple à résistance électrique variable, ou un capteur encodeur.

Selon une mise en œuvre, le dispositif d'asservissement comprend au moins un actionneur électrique secondaire accouplé à la tête d'entraînement pour imposer le mouvement de translation de la tête d'entraînement. Un tel asservissement secondaire permet d'augmenter les possibilités de mouvement en offrant des combinaisons pour éviter des interférences avec un encombrement global compact.

Selon une mise en œuvre, le dispositif d'asservissement comprend au moins un dispositif à piste de came ou de guidage et un organe suiveur pour asservir le mouvement de la tête d'entraînement au mouvement de la cuve de travail.

Selon une mise en œuvre, le dispositif d'asservissement comprend au moins une liaison glissière entre le boîtier et l'organe suiveur.

Selon une mise en œuvre, le dispositif d'asservissement comprend au moins un dispositif secondaire à piste de came ou de guidage et un organe suiveur secondaire, embarqué sur l'organe suiveur.

Selon une mise en œuvre, le dispositif d'asservissement comprend au moins une liaison glissière secondaire entre le boîtier et l'organe suiveur secondaire.

Selon une mise en œuvre, le dispositif d'asservissement comprend au moins une bielle agencée entre la tête d'entraînement et la cuve de travail.

Selon une mise en œuvre, le dispositif d'asservissement est exempt d'actionneur électrique pour déplacer la tête d'entraînement. Une telle mise en œuvre, c'est-à-dire un asservissement mécanique, permet de procurer un asservissement robuste et économique.

Selon une mise en œuvre, l'appareil de préparation culinaire comprend un dispositif de verrouillage de cuve agencé pour verrouiller de manière réversible la cuve de travail en position de travail.

Selon une mise en œuvre, le dispositif de verrouillage de cuve comprend une fourchette de verrouillage avec deux index de verrouillage chacun agencé pour pénétrer dans des portions creuses ménagées dans la cuve de travail, de préférence diamétralement opposées et de préférence agencées dans une base de la cuve de travail.

Selon une mise en œuvre, le dispositif de verrouillage de cuve comprend un organe de commande de verrouillage agissant sur un point unique de la fourchette de verrouillage pour la déformer élastiquement et permettre un dégagement des index de verrouillage de la cuve de travail.

Selon une mise en œuvre, le boîtier forme un col de cygne, dans lequel :
- l'appareil de préparation culinaire comprend un dispositif de réception de la cuve de travail en partie inférieure du col de cygne, et/ou
- la partie supérieure du col de cygne comprend un arbre de rotation formant une liaison pivot pour la tête d'entraînement.

Selon une mise en œuvre, la liaison pivot de la tête d'entraînement est en regard de la cuve de travail lorsque la cuve de travail est en position de travail.

Selon une mise en œuvre :
- le boîtier comprend un moteur d'entraînement principal agencé pour entraîner l'outil de travail en rotation, et fixe par rapport au boîtier,
- la tête d'entraînement comprend un train d'engrenage embarqué en rotation par rapport au boîtier lors du mouvement de dégagement de l'outil de travail, et agencé pour être accouplé avec le moteur d'entraînement principal lorsque la tête d'entraînement est en position engagée.

Selon une mise en œuvre, l'appareil de préparation culinaire comprend un dispositif de verrouillage de tête, agencé pour bloquer la tête d'entraînement en position engagée, lorsque la cuve de travail est en position de travail.

Selon une mise en œuvre, le dispositif d'asservissement comprend un dispositif de dégagement automatique de la tête d'entraînement, comprenant par exemple un ressort en tension lorsque la tête d'entraînement est en position engagée,
et le dispositif d'asservissement comprend un organe de commande de déverrouillage mécanique lié à la cuve de travail, agencé pour déverrouiller le dispositif de verrouillage de tête et libérer le dispositif de dégagement automatique.

Selon une mise en œuvre, l'actionneur électrique est un moteur ou un servomoteur ou un motoréducteur ou un vérin électrique ou un électroaimant.

Selon une mise en œuvre, l'actionneur électrique secondaire est un moteur ou un servomoteur ou un motoréducteur ou un vérin électrique ou un électroaimant.

Selon une mise en œuvre, le mouvement de la cuve de travail entre la position de travail et la position d'accès est un mouvement manuel.

Selon une mise en œuvre :
- la cuve de travail comprend au moins une collerette agencée de préférence au niveau d'une embase de la cuve de travail,
- le boîtier comprend une rainure,
et la collerette est agencée pour être engagée dans la rainure au moins lorsque la cuve de travail est dans la position de travail, et dans lequel de préférence la collerette est agencée pour être engagée dans la rainure au moins sur 70% de la course de la cuve de travail entre la position de travail et la position d'accès.

Selon une mise en œuvre, la course en rotation de la tête d'entraînement de la position engagée vers la position dégagée est suffisante, par exemple au moins 70°, pour permettre un démontage de l'outil de travail avec la cuve en position d'accès.

Selon une mise en œuvre, la cuve de travail est montée amovible par rapport au boîtier.

Selon une mise en œuvre, l'appareil de préparation culinaire comprend un chariot relié au boîtier, le chariot étant agencé pour recevoir la cuve de travail.

Selon une mise en œuvre, le dispositif d'asservissement comprend au moins un dispositif limiteur de couple agencé pour débrayer l'outil de travail ou limiter un effort appliqué sur l'outil de travail lors du mouvement de la tête d'entraînement asservi au mouvement de la cuve de travail.

### Description des figures

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
[Fig.1] représente une vue en perspective d'un appareil de préparation culinaire équipé d'un boîtier, d'une cuve de travail représentée en position de travail, d'un outil de travail représenté dans la cuve de travail pour travailler les aliments reçus dans la cuve de travail, et d'une tête d'entraînement portant l'outil de travail ;
[Fig.2] représente une vue de côté de l'appareil de préparation culinaire de la [Fig.1] ;
[Fig.3] représente l'appareil de préparation culinaire de la [Fig.1], avec la cuve de travail déplacée depuis la position de travail vers une position d'accès, et avec la tête d'entraînement portant l'outil de travail également déplacée dans une position dégagée qui permet de sortir ou de dégager l'outil de travail de la cuve de travail ;
[Fig.4] représente un détail de l'appareil de préparation culinaire de la [Fig.1] sans la cuve de travail, pour montrer un index de verrouillage agencé pour verrouiller la cuve de travail en position de travail sur le boîtier ;
[Fig.5] représente l'appareil de préparation culinaire de la [Fig.1] en vue de dessous, sans le boîtier, pour montrer une fourchette de verrouillage qui porte l'index de verrouillage visible [Fig.4] ;
[Fig.6] représente l'appareil de préparation culinaire de la [Fig.1] en vue de dessus, avec une partie du boîtier entourant la tête d'entraînement retirée,
[Fig.7] représente de manière très schématique les liaisons cinématiques d'un appareil de préparation culinaire comme celui de la [Fig.1], dans lequel le mouvement de la tête d'entraînement et donc de l'outil de travail est asservi à celui de la cuve de travail ;
[Fig.8] représente l'appareil de préparation culinaire schématique de la [Fig.7] lors du déplacement de la cuve de travail ;
[Fig.9] représente l'appareil de préparation culinaire schématique de la [Fig.7] en fin de déplacement de la cuve de travail ;
[Fig.10] représente l'appareil de préparation culinaire schématique de la [Fig.7], avec un asservissement motorisé ;
[Fig.11] représente l'appareil de préparation culinaire schématique de la [Fig.10] à un premier instant du déplacement de la cuve de travail ;
[Fig.12] représente l'appareil de préparation culinaire schématique de la [Fig.10] à un deuxième instant du déplacement de la cuve de travail ;
[Fig.13] représente l'appareil de préparation culinaire schématique de la [Fig.10] à un troisième instant du déplacement de la cuve de travail ;
[Fig.14] représente l'appareil de préparation culinaire schématique de la [Fig.7], avec un asservissement mécanique ;
[Fig.15] représente l'appareil de préparation culinaire schématique de la [Fig.14] à un premier instant du déplacement de la cuve de travail ;
[Fig.16] représente une variante d'exécution de l'appareil de préparation culinaire de la [Fig.1] ;
[Fig.17] représente une autre variante d'exécution de l'appareil de préparation culinaire de la [Fig.1], avec la cuve de travail en position de travail ;
[Fig.18] représente l'appareil de préparation culinaire de la [Fig.17], avec la cuve de travail retirée ;
[Fig.19] représente l'appareil de préparation culinaire de la [Fig.17] avec la cuve de travail déplacée vers la position d'accès.

### Description détaillée de mode(s) de réalisation

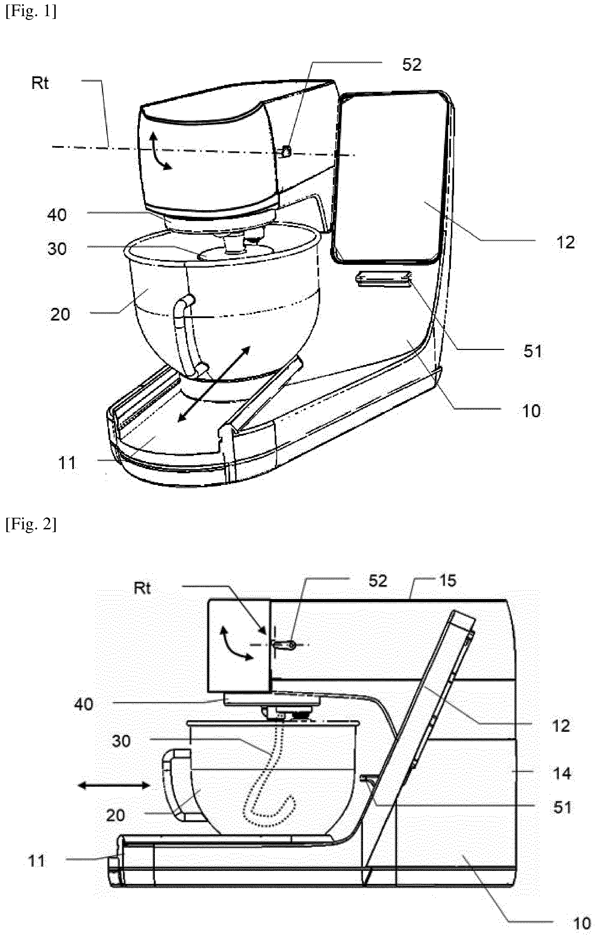

La [Fig.1] et la [Fig.2] représentent un appareil de préparation culinaire, comprenant:
- un boîtier 10,
- une cuve de travail 20 agencée pour recevoir des aliments à préparer,
- au moins un outil de travail 30 agencé pour travailler les aliments reçus dans la cuve de travail 20,
- une tête d'entraînement 40 agencée pour porter l'outil de travail 30.

Comme le montre la [Fig.1], le boîtier 10 comprend :
- une interface de commande 12 de l'appareil de préparation culinaire, cette interface de commande 12 pouvant comprendre au moins un écran d'affichage,
- une partie inférieure qui forme un socle 11 qui reçoit la cuve de travail 20,
- une partie supérieure qui supporte la tête d'entraînement 40.

Tel que mieux visible sur la [Fig.2], le boîtier 10 comporte un montant 14 s'élevant latéralement par rapport au socle 11, et un bras 15 s'étendant latéralement à partir du montant 14 au-dessus du socle 11. La tête d'entraînement 40 est portée par le bras 15.

La tête d'entraînement 40 est agencée pour porter l'outil de travail 30 de manière amovible, on peut prévoir par exemple un montage par emboîtement élastique qui permet à un utilisateur de monter - démonter l'outil de travail 30 rapidement et sans outil spécifique. On peut prévoir aussi un verrouillage de l'outil de travail 30 sur la tête d'entraînement 40 pour sécuriser l'accouplement.

Comme on le voit sur la [Fig.2], le boîtier 10 relie le socle 11 à la tête d'entraînement 40 en formant un col de cygne, qui présente une profondeur suffisante pour accueillir la cuve de travail 20. De plus, on peut noter sur la [Fig.2] que la hauteur libre du col de cygne est légèrement supérieure à celle de la cuve de travail 20, de sorte à pouvoir glisser la cuve de travail 20 dans le col de cygne, tout en limitant la hauteur libre pour garder un châssis rigide et compact.

La cuve de travail 20 est mobile par rapport au boîtier 10. Dans les figures 1 et 2, la cuve de travail 20 est dans une position de travail, c'est-à-dire sous la tête d'entraînement 40, la tête d'entraînement 40 étant dans une position engagée avec l'outil de travail 30 dans la cuve de travail 20.

Comme le montre la double flèche [Fig.1], la cuve de travail 20 est montée coulissante sur le socle 11. On peut prévoir à cet effet des rainures dans le socle 10 qui reçoivent une collerette de la cuve de travail 20, mais on peut aussi prévoir un chariot porteur avec des rails de guidage. La cuve de travail 20 peut donc être coulissée pour être retirée de la position de travail des figures 1 et 2.

Comme cela sera expliqué ci-dessous, la cuve de travail 20 peut être verrouillée dans la position de travail, et la tête d'entraînement 40 peut être verrouillée dans la position dégagée, un organe de commande de déverrouillage 51 étant prévu sur le boîtier 10 pour permettre à un utilisateur de déverrouiller la cuve de travail 20 et/ou la tête d'entraînement 40.

Lorsque la cuve de travail 20 est coulissée pour être retirée de la position de travail en l'éloignant du boîtier 10, il faut sortir l'outil de travail 30 de la cuve de travail 20, pour éviter de bloquer le mouvement.

A cet effet, la tête d'entraînement 40 est prévue mobile par rapport au boîtier 10, de sorte à être au moins pivotante autour d'un axe de pivotement Rt. Plus particulièrement, la tête d'entraînement 40 est montée mobile par rapport au bras 15.

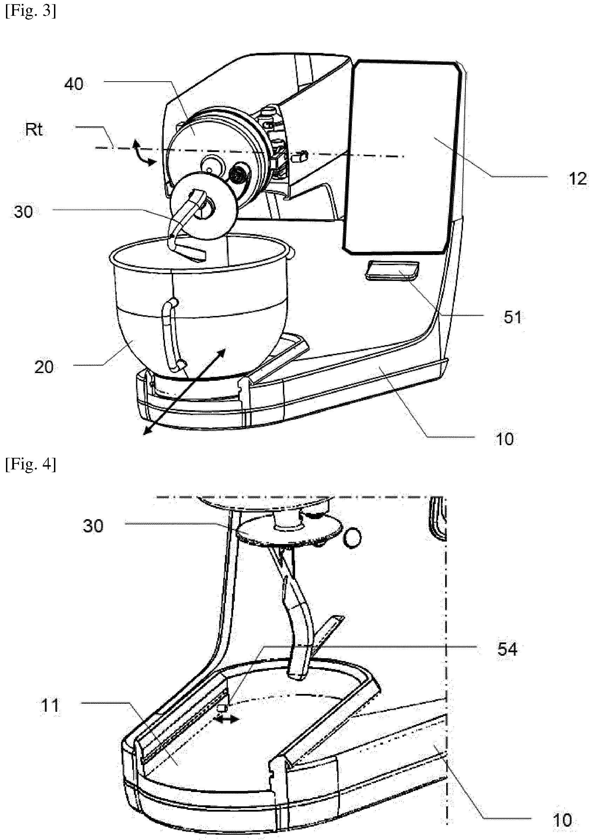

En conséquence, et comme le montre la [Fig.3], la cuve de travail 20 peut aller dans une position d'accès, dans laquelle l'accès à la cuve de travail 20 est facilité, et la tête d'entraînement 40 peut quant à elle aller dans une position dégagée, dans laquelle l'outil de travail 30 est sorti et dégagé de la cuve de travail 20.

De préférence, la cuve de travail 20 est montée amovible par rapport au boîtier 10. Ainsi dans la configuration représentée sur la [Fig.3], l'utilisateur peut retirer ou désolidariser l'outil de travail 30 de la tête d'entraînement 40, mais aussi complètement désolidariser la cuve de travail 20 du boitier 10. La position d'accès correspond à une position d'accouplement ou de désaccouplement de la cuve de travail 20.

En ce qui concerne la [Fig.3], on peut noter que pour des raisons de clarté, le socle 11 n'est pas entièrement représenté, mais on voit que dans la position d'accès, la cuve de travail 20 est encore supportée par le boîtier 10, si bien que l'utilisateur peut laisser la cuve de travail 20 en place pour simplement retirer ou échanger l'outil de travail 30, ou peut encore complètement retirer la cuve de travail 20, pour verser par exemple le contenu de la cuve de travail 20 dans un autre récipient.

L'appareil de préparation culinaire illustré sur les figues 1 à 6 comprend un dispositif de verrouillage de cuve agencé pour verrouiller de manière réversible la cuve de travail 20. Le dispositif de verrouillage de cuve comprend un organe de commande de déverrouillage 51, visible sur les figures 1 à 3.

La [Fig.4] représente une partie du boîtier 10 alors que la cuve de travail a été retirée. Le boîtier 10 comprend au niveau du socle 11 deux index de verrouillage 54, dont un seul est visible sur la [Fig.4]. Les index de verrouillage 54 sont mobiles, par exemple en translation, de sorte à verrouiller / déverrouiller la cuve de travail 20 dans la position de travail.

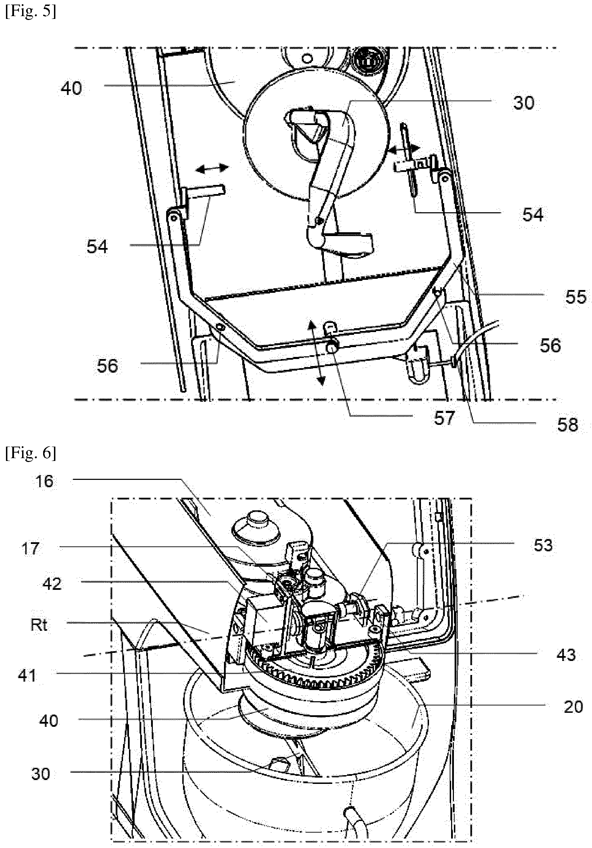

Dans le détail, et comme le montre la [Fig.5] en vue de dessous et sans l'habillage du boîtier 10, le socle 11 loge une fourchette de verrouillage 55 qui porte les deux index de verrouillage 54, qui est articulée autour de deux arbres de verrouillage 56, et qui est commandée par un pion mobile 7 relié par un câble 57 à l'organe de commande de déverrouillage 51. Comme le montrent les doubles flèches de la [Fig.5], un mouvement du pion mobile 57 provoque par bras de levier et flexion élastique de la fourchette de verrouillage 55 un déplacement réversible des index de verrouillage 54. L'organe de commande de déverrouillage 51 agit sur un point unique de la fourchette de verrouillage 55 pour la déformer élastiquement et permettre un dégagement des index de verrouillage 54 de la cuve de travail 20.

Le dispositif de verrouillage de cuve comprend ainsi la fourchette de verrouillage 55 avec les deux index de verrouillage 54 chacun agencé pour pénétrer dans des portions creuses ménagées dans la cuve de travail 20, ces portions creuses étant de préférence diamétralement opposées et de préférence agencées dans une base de la cuve de travail 20.

En ce qui concerne la tête d'entraînement 40, la [Fig.6] montre la partie haute de l'appareil de préparation culinaire, où on peut voir que la tête d'entraînement 40 comprend un train d'engrenage 41, qui peut entraîner l'outil de travail 30 en rotation sous l'action d'un moteur d'entraînement principal (non représenté sur les figures), le moteur d'entraînement principal étant logé dans le boîtier 10.

Comme expliqué ci-dessus, la tête d'entraînement 40 est mobile autour de l'axe de pivotement Rt, et un moteur de pivotement 42, fixé sur une équerre 17 (solidaire du châssis de l'appareil de préparation culinaire et donc du boîtier 10) est directement accouplé à la tête d'entraînement 40. Ainsi, une commande adéquate du moteur de pivotement 42 peut faire passer la tête d'entraînement 40 de la position engagée (figures 1, 2) à la position dégagée ([Fig.3]) et vice versa. On peut envisager d'autres configurations pour faire pivoter la tête d'entraînement 40, tel qu'un actionneur linéaire (un vérin) avec un bras de levier, ou alors un ensemble pignon-crémaillère, ou un électroaimant.

Avantageusement, on peut prévoir de positionner l'axe de pivotement Rt selon la direction verticale pour que le centre de gravité soit sur cet axe de pivotement Rt ou à proximité pour limiter les efforts à appliquer pour pouvoir déplacer la tête d'entraînement 40. En d'autres termes, on peut choisir de placer l'axe de pivotement Rt à un endroit tel que le poids de l'outil de travail 30 et de la partie de la tête d'entraînement 40 situé du même côté de l'axe de pivotement Rt que l'outil de travail 30 soit sensiblement égal au poids de la partie de la tête d'entraînement 40 située de l'autre côté de l'axe de pivotement Rt.

L'appareil de préparation culinaire illustré sur les figues 1 à 6 comprend un dispositif de verrouillage de tête agencé pour bloquer la tête d'entraînement 40 en position engagée, lorsque la cuve de travail 20 est en position de travail.

On peut apercevoir sur la [Fig.6] un arbre de verrouillage 53, qui est solidaire d'un doigt de verrouillage 52 visible figures 1 et 2, afin de verrouiller la tête d'entraînement 40 dans la position engagée de la [Fig.1] ou 2. En effet, le doigt de verrouillage 52 peut s'engager de manière réversible avec un trou d'indexage 43 de la tête d'entraînement 40, visible [Fig.6]. Lors de l'actionnement de l'organe de commande de déverrouillage 51, un câble actionne une came qui fait pivoter - translater l'arbre de verrouillage 53 et aussi le doigt de verrouillage 52, afin de l'engager/dégager du trou de verrouillage 43.

Ainsi, dans la configuration de la [Fig.1] ou 2, la position engagée de la tête d'entraînement 40 est verrouillée - sécurisée, aussi bien que la position de travail de la cuve de travail 20 et le moteur d'entraînement principal peut entraîner l'outil de travail 30 en rotation pour travailler des aliments placés dans la cuve de travail 20.

En actionnant l'organe de commande de déverrouillage 51, l'utilisateur peut déverrouiller la cuve de travail 20 et la tête d'entrainement 40 de leur position de travail et de leur position engagée respectives pour mettre l'appareil de préparation culinaire dans la configuration de la [Fig.3] dans laquelle la cuve de travail 20 occupe la position d'accès et dans laquelle la tête d'entrainement 40 occupe la position dégagée. De préférence, la cuve de travail 20 est verrouillée en position de travail et la tête d'entraînement 40 est verrouillée en position engagée. A titre de variante, d'autres configurations peuvent être envisagées.

Afin de procurer un fonctionnement simple et une utilisation ergonomique de l'appareil de préparation culinaire pour l'utilisateur, il est prévu d'asservir le mouvement de la tête d'entraînement 40 (et donc de l'outil de travail 30) au mouvement de la cuve de travail 20. Autrement dit, un aspect de l'invention consiste à imposer un déplacement de la tête d'entraînement 40 en fonction du déplacement de la cuve de travail 20 entre la position de travail et la position d'accès. Ainsi, l'utilisateur, après le déverrouillage, n'a qu'à agir sur la cuve de travail 20, le déplacement de la tête d'entraînement 40 est alors automatique entre la position engagée et la position dégagée.

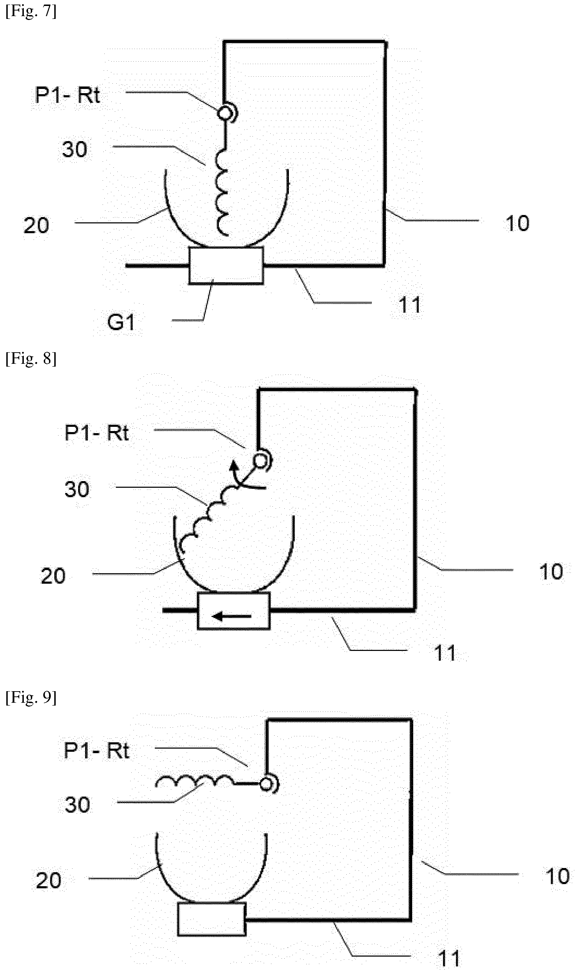

A cet effet, il est prévu plusieurs alternatives de dispositif d'asservissement intégré à l'appareil de préparation culinaire, mais les figures 7, 8 et 9 résument cet aspect relatif à l'asservissement de manière générale.

En effet, la [Fig.7] représente une vue schématique et de côté de l'appareil de préparation culinaire de la [Fig.2], pour montrer les liaisons cinématiques. La cuve de travail 20 est en liaison glissière G1 avec le boîtier 10 (ou son châssis) via le socle 11, et l'outil de travail 30 (via la tête d'entraînement 40 non représentée sur cette vue schématique) est en liaison pivot P1 autour de l'axe de pivotement Rt.

Une fois le déverrouillage effectué, l'utilisateur peut tirer manuellement sur la cuve de travail 20, comme le montre la [Fig.8], et au cours de cette translation, l'outil de travail 30 (via la tête d'entraînement 40) pivote automatiquement pour se dégager de la cuve de travail 20.

Une fois la cuve de travail 20 arrivée en position d'accès comme sur la [Fig.9], alors l'outil de travail 30 est complétement sorti de la cuve de travail 20, ce qui autorise un utilisateur à retirer la cuve de travail 20 facilement et complètement, et/ou à démonter ou à échanger l'outil de travail 30.

On peut noter que l'encombrement du boitier 10 est réduit, notamment dans la direction verticale, car aucun mouvement vertical de la cuve de travail 20 n'est nécessaire.

On peut aussi noter que l'axe de pivotement Rt de la liaison pivot P1 est au-dessus de la cuve de travail 20, et même dans un même plan que l'axe de rotation de l'outil de travail 30 lorsque celui-ci travaille les aliments, si bien que le châssis et/ou le boîtier 10 de l'appareil de préparation culinaire est plus rigide que si l'articulation pivot était à l'arrière de l'appareil de préparation culinaire, c'est à dire sur le montant 14 formant la partie verticale du boîtier 10, située à gauche des figures 7-9. Les masses en mouvement sont également plus faibles, comparées à une architecture où l'articulation pivot est à l'arrière de l'appareil de préparation culinaire.

Enfin, on peut noter que dans cet exemple général, seul un pivot P1 est décrit, mais on peut prévoir alternativement ou en plus une translation de la tête d'entraînement 40 pour dégager l'outil de travail 30 de la cuve de travail 20.

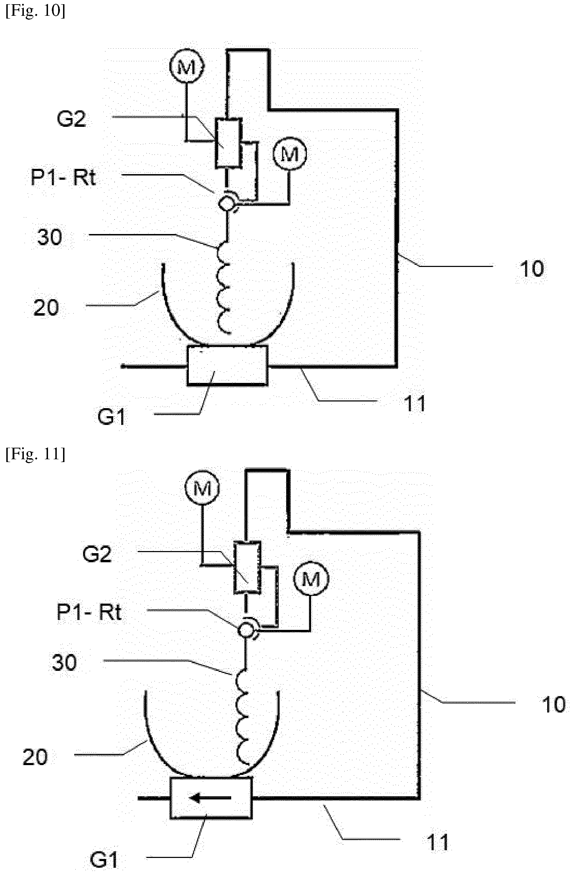

Les figures 10 à 13 représentent une variante de réalisation où l'asservissement du mouvement de la tête d'entraînement 40 est électrique. A cet effet, le dispositif d'asservissement comprend deux moteurs M. Dans la configuration représentée, on retrouve la glissière G1 entre la cuve de travail 20 et le socle 11 du boîtier 10 et la liaison pivot P1 d'axe de pivotement Rt, mais l'outil de travail 30 et la tête d'entraînement 40 sont également embarqués sur une liaison glissière G2 qui fait office de bloc d'embrayage avec le moteur d'entraînement principal de l'appareil de préparation culinaire. Comme le montre la [Fig.10], un premier moteur M est accouplé directement au pivot P1, et un deuxième moteur M est accouplé à la glissière G2.

Pour asservir le pilotage des moteurs M au déplacement de la cuve de travail 20, on peut prévoir des capteurs de position. On peut par exemple implanter dans le socle 11 un codeur linéaire attaché à la glissière G1, ou on peut prévoir un capteur de distance dans le boîtier 10, comme un capteur infra rouge, un capteur laser ou un capteur ultrasons, tous ces capteurs pouvant mesurer une position de la cuve de travail 20 entre sa position de travail et sa position d'accès.

Au cours du mouvement de la cuve de travail 20, ce ou ces capteur(s) suivent la position de la cuve de travail 20, et à un premier instant de ce mouvement de la cuve de travail 20 imposé par l'utilisateur et représenté [Fig.11], aucun mouvement n'est imposé à l'outil de travail 30 car l'outil de travail 30 n'interfère pas avec la cuve de travail 20.

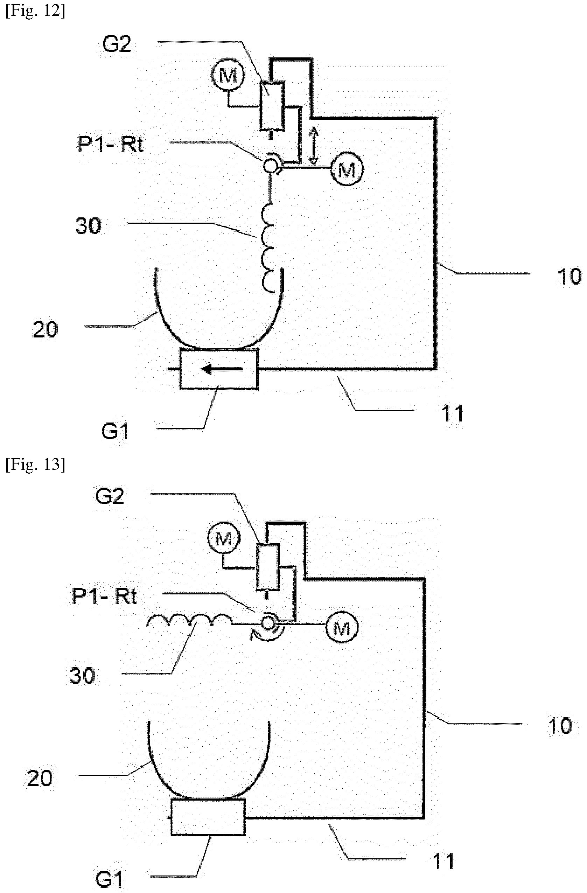

A un deuxième instant du mouvement, représenté [Fig.12], on peut prévoir de ne piloter que le deuxième moteur M accouplé à la glissière G2, pour soulever l'outil de travail 30, ce qui débraye aussi automatiquement la tête d'entraînement 40 du moteur d'entraînement principal. Aucune interférence n'intervient entre l'outil de travail 30 et la cuve de travail 20.

A un troisième instant du mouvement de la cuve de travail 20 vers la position d'accouplement, représenté [Fig.13], on peut prévoir d'actionner le premier moteur M accouplé au pivot P1 pour faire pivoter l'outil de travail 30 et arriver à la position finale de cette [Fig.13] : cuve de travail 20 en position d'accès et tête d'entraînement 40 en position dégagée.

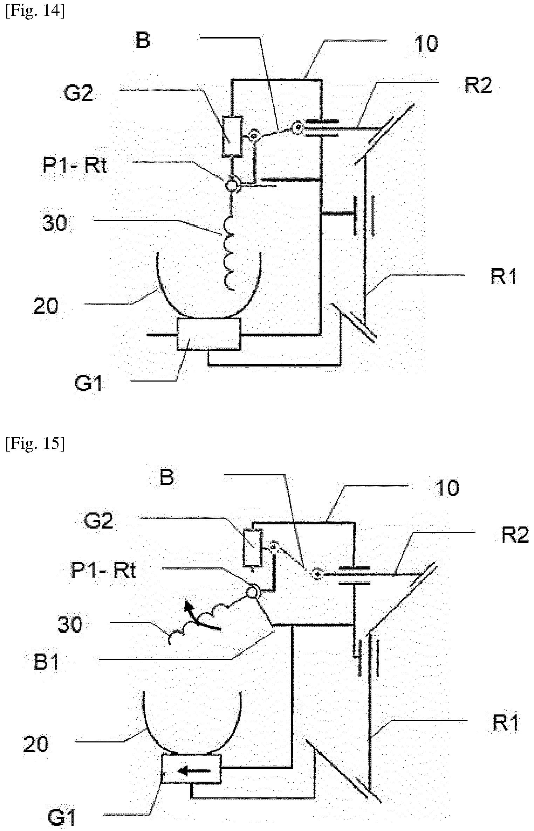

Les figures 14 et 15 représentent une variante de réalisation où l'asservissement du mouvement de la tête d'entraînement 40 est mécanique. A cet effet, et comme visible [Fig.14], on retrouve la liaison glissière G1 entre la cuve de travail 20 et le socle 11, le pivot P1 d'axe de pivotement Rt et la liaison glissière G2 avec le boitier 10, mais un mécanisme de liaison entre la glissière G1 et la glissière G2 est prévu avec un premier renvoi R1, un deuxième renvoi R2, une bielle B et une butée B1.

Le premier renvoi R1 est engagé via des pistes de came ou des liaison plan d'une part avec la glissière G1 et d'autre part avec le deuxième renvoi R2. La bielle B est articulée entre le deuxième renvoi R2 et la glissière G2. Quant à la butée B1, elle empêche un doigt solidaire du premier pivot P1 de se déplacer selon la direction verticale.

Comme le montre la [Fig.15], le déplacement imposé par l'utilisateur à la cuve de travail 20 provoque la transmission du mouvement via le mécanisme de liaison (le premier renvoi R1 puis le deuxième renvoi R2 et la bielle B) à la glissière G2 qui dégage verticalement l'outil de travail 30 vers le haut, ce qui provoque son pivotement via la butée B1.

Bien sûr, d'autres configurations sont possibles pour une mise en œuvre purement mécanique, avec des systèmes à pignon-crémaillère, bras de levier, engrenage, vilebrequin...

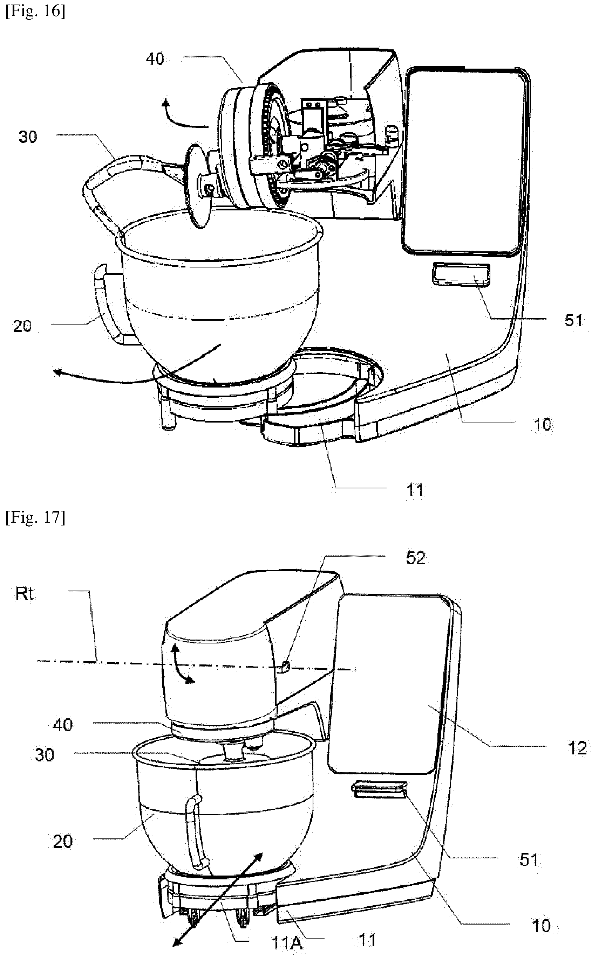

La [Fig.16] représente une variante de réalisation de l'appareil de préparation culinaire de la [Fig.1]. En effet, la cuve de travail 20 n'est plus en liaison glissière avec le socle 11, mais un mouvement circulaire est prévu avec des ergots de la cuve de travail 20 qui sont guidés dans des pistes rainurées prévues dans le socle 11 du boîtier 10. Par ailleurs, le mouvement de la tête d'entraînement 40 est modifié pour se dégager latéralement comme le montre la [Fig.16]. En effet, un mouvement pivot d'axe vertical a été ajouté pour permettre à la tête d'entraînement 40 de suivre le mouvement latéral de la cuve de travail 20.

La [Fig.17] représente une autre variante de réalisation de l'appareil de préparation culinaire de la [Fig.1]. Dans le détail, la cuve de travail 20 est toujours guidée en translation par rapport au boîtier 10, mais selon une alternative où le socle 11 comprend un chariot 11A monté coulissant sur le socle 11 via deux rails de guidage. Le reste de l'appareil de préparation culinaire reste similaire ou identique aux modes de réalisation déjà détaillés ci-dessus.

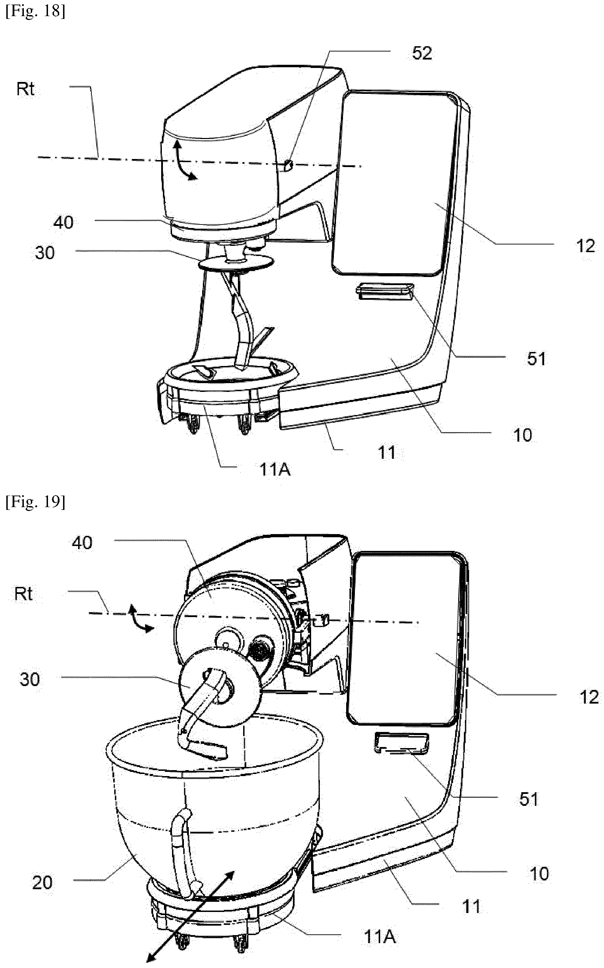

La [Fig.18] représente l'appareil de préparation culinaire de la [Fig.17], sans la cuve de travail, pour bien montrer le chariot 11A, supporté par des roulettes qui reposent sur le plan de travail qui supporte le boîtier 10, et guidé par deux rails de guidage dont on voit celui disposé sur le côté inférieur droit du chariot 11A.

La [Fig.19] représente l'appareil de préparation culinaire de la [Fig.17], avec la cuve de travail 20 déplacée vers la position d'accès, comme sur la [Fig.3]. Pour des raisons de clarté, une partie supérieure de l'habillage du boitier 10 n'est pas représentée. Dans la position d'accès représentée, la cuve de travail 20 a été tirée par l'utilisateur pour faire coulisser le chariot 11A, et la tête d'entraînement 40 portant l'outil de travail 30 a pivoté autour de l'axe de pivotement Rt pour dégager l'outil de travail 30 de la cuve de travail 20. Comme expliqué pour les autres modes de réalisation, l'outil de travail 30 est alors parfaitement accessible pour être manipulé ou échangé par l'utilisateur.

On peut prévoir d'autres types de guidages / mouvements pour la cuve de travail 20, avec par exemple des articulations de type pantographe, ou de translation circulaire...

En tout état de cause, le mouvement de la tête d'entraînement 40 est asservi sur celui de la cuve de travail 20, si bien que l'utilisateur n'a qu'à déverrouiller la cuve de travail 20 et la tirer vers lui pour provoquer le mouvement automatique de la tête d'entraînement 40.

Au surplus, le basculement de la tête d'entraînement 40 offre une préhension / manipulation aisée de l'outil de travail 30, qui se retrouve horizontal ou quasi horizontal, en face de l'utilisateur. Autrement dit, le basculement de la tête d'entrainement 40 est d'au moins 75° et de préférence d'environ 90° entre la position engagée de la [Fig.1] ou 17 et la position dégagée des figures 3, 16 ou 19.

On peut aussi prévoir un dispositif limiteur de couple dans la chaine cinématique, pour provoquer un débrayage de la tête d'entraînement 40 automatique au-delà d'un certain couple. Cela permet d'éviter un pincement de l'utilisateur ou un endommagement du système si une interférence intervient.

On comprendra que diverses modifications et/ou améliorations évidentes pour l'homme du métier peuvent être apportées aux différents modes de réalisation de l'invention décrits dans la présente description sans sortir du cadre de l'invention, tant que ces modifications et/ou améliorations sont comprises dans la portée des revendications.

## Revendications

1. Appareil de préparation culinaire, comprenant :
- un boîtier (10),
- une cuve de travail (20) agencée pour recevoir des aliments à préparer,
- au moins un outil de travail (30) agencé pour travailler les aliments reçus dans la cuve de travail (20),
- une tête d'entraînement (40) agencée pour porter l'outil de travail (30), dans lequel :
- la cuve de travail (20) est mobile par rapport au boîtier (10) entre une position de travail et une position d'accès,
- la tête d'entraînement (40) est mobile par rapport au boîtier (10) entre une position engagée dans laquelle l'outil de travail (30) est engagé dans la cuve de travail (20), et une position dégagée dans laquelle l'outil de travail (30) est au moins partiellement dégagé de la cuve de travail (20), **caractérisé en ce que** l'appareil de préparation culinaire comprend un dispositif d'asservissement du mouvement de la tête d'entraînement (40) au mouvement de la cuve de travail (20) pour imposer un mouvement de rotation à la tête d'entraînement (40) lors du mouvement de la cuve de travail (20).

2. Appareil de préparation culinaire selon la revendication 1, dans lequel le dispositif d'asservissement est agencé pour imposer en outre un mouvement de translation à la tête d'entraînement (40) lors du mouvement de la cuve de travail (20).

3. Appareil de préparation culinaire selon la revendication 2, dans lequel le dispositif d'asservissement est agencé pour imposer à la tête d'entraînement (40) le mouvement de translation et le mouvement de rotation de manière au moins partiellement séquentielle ou de manière au moins partiellement simultanée.

4. Appareil de préparation culinaire selon la revendication 2 ou 3, dans lequel le dispositif d'asservissement comprend un bloc débrayable agencé entre le boîtier (10) et la tête d'entraînement (40), agencé pour accoupler / désaccoupler une première partie de la tête d'entraînement (40) en liaison glissière d'une deuxième partie de la tête d'entraînement (40) en liaison pivot lors du mouvement de la cuve de travail (20).

5. Appareil de préparation culinaire selon l'une des revendications 1 à 4, dans lequel le mouvement de la cuve de travail (20) entre la position de travail et la position d'accès comprend au moins une translation.

6. Appareil de préparation culinaire selon l'une des revendications 1 à 5, dans lequel le mouvement de la cuve de travail (20) entre la position de travail et la position d'accès comprend au moins une rotation.

7. Appareil de préparation culinaire selon l'une des revendications 1 à 6, dans lequel le dispositif d'asservissement comprend au moins un actionneur électrique accouplé à la tête d'entraînement (40) pour imposer le mouvement de rotation de la tête d'entraînement (40),
et dans lequel l'actionneur électrique est accouplé à la tête d'entraînement (40) en prise directe, ou via un train d'engrenage, ou via un dispositif de transmission de mouvement linéaire et un bras de levier.

8. Appareil de préparation culinaire selon la revendication 7, dans lequel le dispositif d'asservissement comprend au moins un capteur de détection de position de la cuve de travail (20), agencé pour détecter la position de la cuve de travail (20) entre la position de travail et la position d'accès, de sorte à piloter l'actionneur électrique en fonction de la position de la cuve de travail (20).

9. Appareil de préparation culinaire selon l'une des revendications 7 ou 8 dans leur dépendance à l'une des revendications 2 à 4,
dans lequel le dispositif d'asservissement comprend au moins un actionneur électrique secondaire accouplé à la tête d'entraînement (40) pour imposer le mouvement de translation de la tête d'entraînement (40).

10. Appareil de préparation culinaire selon l'une des revendications 1 à 9, dans lequel le dispositif d'asservissement comprend au moins un dispositif à piste de came ou de guidage et un organe suiveur pour asservir le mouvement de la tête d'entraînement (40) au mouvement de la cuve de travail (20).

11. Appareil de préparation culinaire selon la revendication 10, dans lequel le dispositif d'asservissement comprend au moins une liaison glissière entre le boîtier (10) et l'organe suiveur.

12. Appareil de préparation culinaire selon l'une des revendications 10 ou 11, dans lequel le dispositif d'asservissement comprend au moins une bielle agencée entre la tête d'entraînement (40) et la cuve de travail (20).

13. Appareil de préparation culinaire selon l'une des revendications 10 à 12, dans lequel le dispositif d'asservissement est exempt d'actionneur électrique pour déplacer la tête d'entraînement (40).

14. Appareil de préparation culinaire selon l'une des revendications 1 à 13, comprenant un dispositif de verrouillage de cuve agencé pour verrouiller de manière réversible la cuve de travail (20) en position de travail.

15. Appareil de préparation culinaire selon la revendication 14, dans lequel le dispositif de verrouillage de cuve comprend une fourchette de verrouillage (55) avec deux index de verrouillage (54) chacun agencé pour pénétrer dans des portions creuses ménagées dans la cuve de travail (20), de préférence diamétralement opposées et de préférence agencées dans une base de la cuve de travail (20).

16. Appareil de préparation culinaire selon l'une des revendications 1 à 15, dans lequel le boîtier (10) forme un col de cygne, dans lequel :
- l'appareil de préparation culinaire comprend un dispositif de réception de la cuve de travail (20) en partie inférieure du col de cygne, et/ou
- la partie supérieure du col de cygne comprend un arbre de rotation formant une liaison pivot (P1) pour la tête d'entraînement (40).

17. Appareil de préparation culinaire selon la revendication 16, dans lequel la liaison pivot (P1) de la tête d'entraînement (40) est en regard de la cuve de travail (20) lorsque la cuve de travail (20) est en position de travail.

18. Appareil de préparation culinaire selon l'une des revendications 1 à 17, comprenant un dispositif de verrouillage de tête, agencé pour bloquer la tête d'entraînement (40) en position engagée, lorsque la cuve de travail (20) est en position de travail.

19. Appareil de préparation culinaire selon l'une des revendications 1 à 18, dans lequel la cuve de travail (20) est montée amovible par rapport au boîtier (10).

20. Appareil de préparation culinaire selon l'une des revendications 1 à 19, dans lequel le dispositif d'asservissement comprend au moins un dispositif limiteur de couple agencé pour débrayer l'outil de travail (30) ou limiter un effort appliqué sur l'outil de travail (30) lors du mouvement de la tête d'entraînement (40) asservi au mouvement de la cuve de travail (20).

## Patentansprüche

1. Lebensmittelzubereitungseinrichtung, umfassend:
- ein Gehäuse (10),
- einen Arbeitsbehälter (20), der dafür eingerichtet ist, zuzubereitende Lebensmittel aufzunehmen,
- mindestens ein Arbeitswerkzeug (30), das dafür eingerichtet ist, die im Arbeitsbehälter (20) aufgenommenen Lebensmittel zu bearbeiten,
- einen Antriebskopf (40), der dafür eingerichtet ist, das Arbeitswerkzeug (30) zu tragen, wobei:
- der Arbeitsbehälter (20) in Bezug auf das Gehäuse (10) zwischen einer Arbeitsposition und einer Zugangsposition beweglich ist,
- der Antriebskopf (40) in Bezug auf das Gehäuse (10) zwischen einer eingerückten Position, in der das Arbeitswerkzeug (30) in den Arbeitsbehälter (20) eingerückt ist, und einer ausgerückten Position, in der das Arbeitswerkzeug (30) mindestens teilweise aus dem Arbeitsbehälter (20) ausgerückt ist, beweglich ist, **dadurch gekennzeichnet, dass** die Lebensmittelzubereitungseinrichtung eine Vorrichtung zum Regeln der Bewegung des Antriebskopfes (40) in Abhängigkeit von der Bewegung des Arbeitsbehälters (20) umfasst, um dem Antriebskopf (40) bei der Bewegung des Arbeitsbehälters (20) eine Drehbewegung aufzuzwingen.

2. Lebensmittelzubereitungseinrichtung nach Anspruch 1, wobei die Regelvorrichtung dafür eingerichtet ist, dem Antriebskopf (40) bei der Bewegung des Arbeitsbehälters (20) weiter eine Verschiebebewegung aufzuzwingen.

3. Lebensmittelzubereitungseinrichtung nach Anspruch 2, wobei die Regelvorrichtung dafür eingerichtet ist, dem Antriebskopf (40) die Verschiebebewegung und die Drehbewegung mindestens teilweise nacheinander oder mindestens teilweise gleichzeitig aufzuzwingen.

4. Lebensmittelzubereitungseinrichtung nach Anspruch 2 oder 3, wobei die Regelvorrichtung einen zwischen dem Gehäuse (10) und dem Antriebskopf (40) eingerichteten, auskuppelbaren Block umfasst, der dafür eingerichtet ist, einen ersten Teil des Antriebskopfs (40) in Gleitverbindung mit einem zweiten Teil des Antriebskopfs (40) in Schwenkverbindung bei der Bewegung des Arbeitsbehälters (20) zu koppeln/zu entkoppeln.

5. Lebensmittelzubereitungseinrichtung nach einem der Ansprüche 1 bis 4, wobei die Bewegung des Arbeitsbehälters (20) zwischen der Arbeitsposition und der Zugangsposition mindestens eine Verschiebung umfasst.

6. Lebensmittelzubereitungseinrichtung nach einem der Ansprüche 1 bis 5, wobei die Bewegung des Arbeitsbehälters (20) zwischen der Arbeitsposition und der Zugangsposition mindestens eine Drehung umfasst.

7. Lebensmittelzubereitungseinrichtung nach einem der Ansprüche 1 bis 6, wobei die Regelvorrichtung mindestens eine elektrische Betätigungsvorrichtung umfasst, die mit dem Antriebskopf (40) gekoppelt ist, um die Drehbewegung des Antriebskopfes (40) zu erzwingen, und wobei die elektrische Betätigungsvorrichtung in direktem Eingriff, oder über einen Radsatz, oder über eine Vorrichtung zur linearen Bewegungsübertragung und einen Hebelarm mit dem Antriebskopf (40) gekoppelt ist.

8. Lebensmittelzubereitungseinrichtung nach Anspruch 7, wobei die Regelvorrichtung mindestens einen Sensor zur Positionserfassung des Arbeitsbehälters (20) umfasst, der dafür eingerichtet ist, die Position des Arbeitsbehälters (20) zwischen der Arbeitsposition und der Zugangsposition zu erfassen, um die elektrische Betätigungsvorrichtung in Abhängigkeit von der Position des Arbeitsbehälters (20) zu steuern.

9. Lebensmittelzubereitungseinrichtung nach einem der Ansprüche 7 oder 8 in Abhängigkeit von einem der Ansprüche 2 bis 4, wobei die Regelvorrichtung mindestens eine sekundäre elektrische Betätigungsvorrichtung umfasst, die mit dem Antriebskopf (40) gekoppelt ist, um die Verschiebebewegung des Antriebskopfes (40) zu erzwingen.

10. Lebensmittelzubereitungseinrichtung nach einem der Ansprüche 1 bis 9, wobei die Regelvorrichtung mindestens eine Nockenbahn- oder Führungsvorrichtung und ein Folgerorgan umfasst, um die Bewegung des Antriebskopfes (40) in Abhängigkeit von der Bewegung des Arbeitsbehälters (20) zu regeln.

11. Lebensmittelzubereitungseinrichtung nach Anspruch 10, wobei die Regelvorrichtung mindestens eine Gleitverbindung zwischen dem Gehäuse (10) und dem Folgerorgan umfasst.

12. Lebensmittelzubereitungseinrichtung nach einem der Ansprüche 10 oder 11, wobei die Regelvorrichtung mindestens eine Pleuelstange umfasst, die zwischen dem Antriebskopf (40) und dem Arbeitsbehälter (20) eingerichtet ist.

13. Lebensmittelzubereitungseinrichtung nach einem der Ansprüche 10 bis 12, wobei die Regelvorrichtung keine elektrische Betätigungsvorrichtung zum Bewegen des Antriebskopfes (40) besitzt.

14. Lebensmittelzubereitungseinrichtung nach einem der Ansprüche 1 bis 13, die eine Behälterverriegelungsvorrichtung umfasst, die dafür eingerichtet ist, den Arbeitsbehälter (20) reversibel in der Arbeitsposition zu verriegeln.

15. Lebensmittelzubereitungseinrichtung nach Anspruch 14, wobei die Behälterverriegelungsvorrichtung eine Verriegelungsgabel (55) mit zwei Verriegelungsmarken (54) umfasst, die jeweils dafür eingerichtet sind, in hohle Abschnitte einzudringen, die im Arbeitsbehälter (20), bevorzugt diametral gegenüberliegend und bevorzugt in einer Basis des Arbeitsbehälters (20) eingerichtet, ausgestaltet sind.

16. Lebensmittelzubereitungseinrichtung nach einem der Ansprüche 1 bis 15, wobei das Gehäuse (10) einen Schwanenhals bildet, wobei:
- die Lebensmittelzubereitungseinrichtung eine Vorrichtung zum Aufnehmen des Arbeitsbehälters (20) im unteren Teil des Schwanenhalses umfasst, und/oder
- der obere Teil des Schwanenhalses eine Drehwelle umfasst, die eine Schwenkverbindung (P1) für den Antriebskopf (40) bildet.

17. Lebensmittelzubereitungseinrichtung nach Anspruch 16, wobei die Schwenkverbindung (P1) des Antriebskopfes (40) dem Arbeitsbehälter (20) zugewandt ist, wenn sich der Arbeitsbehälter (20) in Arbeitsposition befindet.

18. Lebensmittelzubereitungseinrichtung nach einem der Ansprüche 1 bis 17, die eine Kopfverriegelungsvorrichtung umfasst, die dafür eingerichtet ist, den Antriebskopf (40) in der eingerückten Position zu sperren, wenn sich der Arbeitsbehälter (20) in der Arbeitsposition befindet.

19. Lebensmittelzubereitungseinrichtung nach einem der Ansprüche 1 bis 18, wobei der Arbeitsbehälter (20) in Bezug auf das Gehäuse (10) abnehmbar angebracht ist.

20. Lebensmittelzubereitungseinrichtung nach einem der Ansprüche 1 bis 19, wobei die Regelvorrichtung mindestens eine Drehmomentbegrenzungsvorrichtung umfasst, die dafür eingerichtet ist, das Arbeitswerkzeug (30) auszukuppeln oder eine Kraft, die bei der in Abhängigkeit von der Bewegung des Arbeitsbehälters (20) geregelten Bewegung des Antriebskopfes (40) auf das Arbeitswerkzeug (30) ausgeübt wird, zu begrenzen.

## Claims

1. Food preparation appliance, comprising:
- a housing (10),
- a working bowl (20) arranged to receive food to be prepared,
- at least one working tool (30) arranged to work the food received in the working bowl (20),
- a drive head (40) arranged to support the working tool (30), wherein:
- the working bowl (20) is movable with respect to the housing (10) between a working position and an access position,
- the drive head (40) is movable with respect to the housing (10) between an engaged position, wherein the working tool (30) is engaged in the working bowl (20), and a disengaged position, wherein the working tool (30) is at least partially disengaged from the working bowl (20), **characterised in that** the food preparation appliance comprises a device for slaving the movement of the drive head (40) to the movement of the working bowl (20) in order to impart a rotational movement to the drive head (40) during the movement of the working bowl (20).

2. Food preparation appliance according to claim 1, wherein the slaving device is arranged to further impart a translational movement to the drive head (40) during the movement of the workin bowl (20).

3. Food preparation appliance according to claim 2, wherein the slaving device is arranged to impart to the drive head (40), the at least partially sequential or at least partially simultaneous translational movement and rotational movement.

4. Food preparation appliance according to claim 2 or 3, wherein the slaving device comprises a disengageable block arranged between the housing (10) and the drive head (40), arranged to couple/uncouple a first part of the drive head (40) in sliding connection of a second part of the drive head (40) in pivot connection during the movement of the working bowl (20).

5. Food preparation appliance according to any one of claims 1 to 4, wherein the movement of the working bowl (20) between the working position and the access position comprises at least one translation.

6. Food preparation appliance according to any one of claims 1 to 5, wherein the movement of the working bowl (20) between the working position and the access position comprises at least one rotation.

7. Food preparation appliance according to any one of claims 1 to 6, wherein the slaving device comprises at least one electric actuator coupled to the drive head (40) to impart the rotational movement of the drive head (40), and wherein the electric actuator is coupled to the drive head (40) in direct engagement, or via a gear train, or via a linear movement transmission device and a lever arm.

8. Food preparation appliance according to claim 7, wherein the slaving device comprises at least one sensor for detecting the position of the working bowl (20), arranged to detect the position of the working bowl (20) between the working position and the access position, so as to control the electric actuator according to the position of the working bowl (20).

9. Food preparation appliance according to any one of claims 7 or 8 dependent from any one of claims 2 to 4, wherein the slaving device comprises at least one secondary electric actuator coupled to the drive head (40) to impart the translational movement of the drive head (40).

10. Food preparation appliance according to any one of claims 1 to 9, wherein the slaving device comprises at least one cam track or guiding device and a follower member to slave the movement of the drive head (40) to the movement of the working bowl (20).

11. Food preparation appliance according to claim 10, wherein the slaving device comprises at least one slide connection between the housing (10) and the follower member.

12. Food preparation appliance according to any one of claims 10 or 11, wherein the slaving device comprises at least one connecting rod arranged between the drive head (40) and the working bowl (20).

13. Food preparation appliance according to any one of claims 10 to 12, wherein the slaving device has no electric actuator to move the drive head (40).

14. Food preparation appliance according to any one of claims 1 to 13, comprising a bowl locking device arranged to reversibly lock the working bowl (20) in the working position.

15. Food preparation appliance according to claim 14, wherein the bowl locking device comprises a locking fork (55) with two locking indicators (54), each arranged to penetrate into hollow portions provided in the working bowl (20), preferably diametrically opposite and preferably arranged in a base of the working bowl (20).

16. Food preparation appliance according to any one of claims 1 to 15, wherein the housing (10) forms a gooseneck, wherein
- the food preparation appliance comprises a device for receiving the working bowl (20) in the lower part of the gooseneck, and/or
- the upper part of the gooseneck comprises a rotary shaft forming a pivot connection (P1) for the drive head (40).

17. Food preparation appliance according to claim 16, wherein the pivot connection (P1) of the drive head (40) faces the working bowl (20) when the working bowl (20) is in the working position.

18. Food preparation appliance according to any one of claims 1 to 17, comprising a head locking device, arranged to lock the drive head (40) in the engaged position, when the working bowl (20) is in the working position.

19. Food preparation appliance according to any one of claims 1 to 18, wherein the working bowl (20) is removably mounted with respect to the housing (10).

20. Food preparation appliance according to any one of claims 1 to 19, wherein the slaving device comprises at least one torque limiting device arranged to disengage the working tool (30) or limit a force applied on the working tool (30) during the movement of the drive head (40) slaved to the movement of the working bowl (20).
